# EUROPEAN PATENT APPLICATION

(11) **EP 3 046 207 A1**
(43) Date of publication of application: **20.07.2016**
(21) Application number: 15159251.6
(22) Date of filing: 16.03.2015
(51) Int. Cl.: H02J 5/00, H02J 7/02, H02J 50/00

(54) **WIRELESS CHARGER**

(30) Priority: 19.01.2015 GB 201500834
(71) Applicant: Yota Devices IPR Ltd (VG), Road Town, Tortola VG1110 (VG)
(72) Inventor: Lvovich, Sverdlov Denis, 190000 Saint Petersburg (RU); Tokkonen, Timo, 90800 Oulu (FI); Nevalainen, Jouni, 91100 li (FI)
(74) Representative: Richardt Patentanwälte PartG mbB

(57) **Abstract**

The invention relates to a charging device (100) comprising a display, a charging unit (108) and a memory (112) storing machine executable instructions, the charging unit (108) being adapted for inductively charging a target device (102), the charging device (100) further comprising a processor (110) for controlling the charging device (100) by execution of the instructions, the execution of the instructions causing the charging device (100) to display a placement indication (200; 202; 204) on the display, the placement indication (200; 202; 204) indicating a spatial placement of the target device (102) on the surface of the display for which inductive charging of the target device (102) will be possible with at least a predetermined power transfer efficiency.

## Description

The invention relates to a charging device, a method of operating a charging device, a computer program product and an apparatus for charging a target device.

Wireless charging is a well-known technique which provides a convenient and safe means to charge consumer electronic and industrial devices. Wireless charging has the advantage, that physical connectors or cables are eliminated, which provides advantages including efficiency, cost and safety. Wireless charging, also known as inductive charging, uses an electromagnetic field to transfer energy between the charger and device to be charged. A primary induction coil comprised in the charger and a secondary induction coil comprised in the device to be charged combine in proximity to form an electrical transformer. Greater distances between the sender and the receiver coils can be achieved when an inductive charging system uses a technique called "resonant inductive coupling".

US 2014/0049882 A1 discloses a display panel having a wireless charging function, the display panel including a first substrate, an induction coil layer, a display pixel layer and a second substrate. The induction coil layer is disposed on the first substrate. The induction coil layer includes at least one induction coil. The induction coil layer is adapted for collaborating with a wireless charging power supply, such that the induction coil layer executes a wireless charging function.

It is an objective of the invention to provide for a charging device, a method of operating such charging device, a computer program product as well as an apparatus for charging a target device.

The objectives of the invention are solved by the independent claims. Preferred embodiments are described by the dependent claims.

A charging device, for example a telecommunication device is described comprising a display, a charging unit and a memory storing machine-executable instructions, the charging unit being adapted for inductively charging a target device. The charging device further comprises a processor for controlling the charging device by executing of the instructions, the executing of the instructions causing the charging device to display a placement indication on the display, the placement indication indicating a spatial placement of the target device on the surface of the display for which inductive charging of the target device will be possible with at least a predetermined power transfer efficiency.

A charging device may for example be a mobile phone, smartphone, tablet PC, laptop, netbook and e.g. any portable device which uses wireless communication to receive and transfer data. A target device may include also one of the aforementioned charging devices, which may further include headsets, smartwatches, navigation systems, telephones, MP3 players, any kind of audio equipment, calculators, digital cameras etc.

Inductive charging is the transmission of energy from the charging unit to the target device without the use of a physical connection and only by means of an electromagnetic field. The 'power transfer efficiency' describes the efficiency at which electrical power is transferred from the charging unit to the target device. A high efficiency can typically be achieved at close spatial distance between the charging unit and the target device, whereas the efficiency drops dramatically at larger distance. A similar relationship holds in that a high efficiency can be achieved for coils of similar size, whereas the efficiency drops at a large size difference of the coils.

If two resonators are placed in proximity to one another such that there is an electromagnetic coupling between them, it is possible to exchange energy between the resonators. The efficiency of energy exchange depends on the characteristic parameters for each resonator and the energy coupling rate between them. Simply spoken, the efficiency of the power transmission basically depends on the coupling between the two resonator systems and the quality factors Q of these two systems.

The 'at least predetermined power transfer efficiency' is understood as an absolute or a relative specification. In case of an absolute specification, the predetermined power transfer efficiency may be given by a certain dimensionless absolute number like the "efficiency of the power transmission depending on the coupling between the two resonator systems and the quality factors Q of these two systems". Or it may be given by a relative number like for example a percentage. In this case this relative number considers the charging unit and the specific target device, wherein the displayed placement indication is the spatial position on the display at which position relative to the maximally achievable power transfer between the charging unit and that specific target device a certain relative power transfer efficiency (for example 80% of the maximum) is achievable.

Preferably, for the present invention the predetermined power transfer efficiency is chosen to be 100% of the maximally achievable power transfer between a given pair of charging unit and target device. Thus, in this scenario, the at least predetermined power transfer efficiency is the maximally achievable power transfer that can be obtained when inductively coupling the charging unit and the target device when positioning the target device onto an optimally chosen spatial position (placement) onto the display of the charging device.

Embodiments of the invention may have the advantage that the charging device is able to charge any target device in an optimal manner, preferably with maximum efficiency. Thus, a single charging device having the charging unit may be used for a multitude of different target devices irrespective of the geometrical shapes of the target devices. For each target device to be charged, the display will show the optimal place for the desired wireless charging efficiency.

An advantage of the present invention may further be that the charging coils of the charging unit and the target device as well as supported charging protocols may not need to match as long as there is a physical possibility for charging to occur. The target device may even work at a lower operating voltage than the charging device itself, as it is the case for target devices like Bluetooth headsets, smartwatches etc. and charging devices like laptops, mobile phones, smartphones etc.

Thus, after execution of the instructions causing the telecommunication to charge the target device, charging can be performed with a very high efficiency and in a flexible manner.

In accordance with an embodiment of the invention, the placement indication is any one of the following: a part or all of a contour line of the target device when being placed on the display, a part or all of a 3D image, for example a wire frame image, of the target device when being placed on the display, a written instruction, a symbol like for example an x-mark or a circle indicating the centre position of the area on the display where the inductive charging of the target device will be possible with said at least predetermined power transfer efficiency, a pictorial instruction how to place the target device onto the display, a photograph or image of the target device (102) displaying the visual appearance of the target device (102) when being placed on the display. A further possibility is the usage of arrows pointing to the desired placement position. In case the arrows start from the borders of the display or at least outside the outline of the target device, the arrows may be always visible when placing the target device onto the display or show guidance to which direction to move the target device for optimal charging. A further possibility is that the placement indication additionally comprises texts, images and/or videos of any source like for example the internet or other sources external to the charging device. A further possibility is that any of the above described kinds of placement indications is animated.

Thus, an efficient means may be provided for a wide variety of target devices to ensure correct placement of target devices on the surface of the display of the charging device. For example, outlines are shown at the position where such devices can be charged with high efficiency matched to their physical and electrical properties. Such properties may be for example a wireless charging coil size, spatial placement, type and voltage.

In a further embodiment, the placement indication further comprises information about the current power source level of the target device to be charged. If e.g. an accessory target device is connected to the charging device and the charging device knows the targets' power source level, it could show on its display that the target devices' power source level is under certain level that it should be recharged. E.g. an image or wire frame of that particular Bluetooth headset is shown with the remaining power source energy level percentage and/or voltage as well. Pressing the image on the display could also alert the headset to give a sound to locate it for recharging.

It is also possible to show on the display during charging and/or after charging any one of the following: the current power source level of the target device, how high the power source level was raised since beginning of charging, the expected operation time of the target device with the present or maximum power source level. This may be especially beneficial with e.g. target devices like headsets having no displays.

In a further embodiment, several device areas may be indicated simultaneously on the display. For example a first target device like a smartwatch may already be placed on the display and a second target device may be brought to the display. In case both target devices can be charged due to power source and/or voltage levels, the display could indicate simultaneously show optimal places for two target devices to be charged, where both locations are worse than the location for just a single one of the devices. However, the indicated locations would be optimal for the two target devices be charged. This may work very well for a charging device being a tablet PC having multiple charging coils.

In accordance with an embodiment of the invention, execution of the instructions further causes the charging device to determine the type of the target device and to select a placement indication specifically for the determined type of the target device. Thus, the placement indication can be chosen very specifically with respect to the electromagnetic coupling between the charging unit and the target device. The selection of the placement indication may consider coil sizes and coil positions in the charging unit and the target device, different coil shapes, spatial distances between the charging unit and the coil in the target device and much more.

The selection of the placement indication may be done according to any of of the following: from an internal storage of the charging device which has stored various placement indications; by specific calculation just in time for the determined type of target device by the charging device and/or an external service coupled to the charging device like for example an external server; by selection and download from an external server, like for example from an external database, web service or cloud system.

The determination of the type of the target device may include a passive or active communication with the target device. For example, in case of an active communication the charging device may request information about the type of the target device from the target device, and as a response receive the requested information. Vice versa it is also possible that a target device contacts actively the charging device and provides its type to the charging device. In case of passive communication, near field communication (NFC), especially RFID communication may be used with the target device having a passive transponder that is contacted by the charging device. Thus, the target device may be recognized using NFC, and then the optimal position for that one particular device is shown on the display of the charging device.

The usage of especially passive (RFID) NFC may have the advantage that the power required for that kind of communication is extremely low on the side of the charging device and zero on the side of the target device, and for detection of an NFC tag located on the target device can be performed solely based on detecting the close approach of the target device to the charging device due to the low range of the NFC communication.

In accordance with an embodiment of the invention, the charging device comprises a power source for charging the target device and operating the charging device, wherein execution of the instructions further causes the charging device to determine if a power source level, like for example indicated by an operating voltage or a deliverable current, is below a first power source level on which the charging device is not regularly operable anymore, and in case the power source level is below the first power source level, permitting the inductive charging of the target device with the available power source capacity. Preferably, the permission of the inductive charging of the target device with the available power source capacity is maximally as long as the power source level is equal or above a second power source level. The second power source level may be determined as a power source level at which for example damage of the power source due to deep discharge is avoided.

The term 'regularly operable' is understood as the state of the charging device when it is able without restrictions to run its operating system to provide a user the unrestricted functionality intended by the device, for example data or voice telecommunication functionality, functionality to control industrial machines etc. Data communication functionalities are understood as wireless LAN and cellular network data transmissions, preferably excluding the NFC capabilities that may be used for recognizing the device to be charged as discussed above. In case of a device solely operating on short-range communication, i.e. the device being a short-range device communicating using wireless LAN or Bluetooth or other frequency bands, the term 'regularly operable' is understood as the capability of the device using this communication capability without any restrictions, again preferably excluding the NFC capabilities that may be used for recognizing the device to be charged as discussed above.

This may have the advantage that even though the current power source level of the charging device may not be sufficient anymore for a regular operation of the charging device, the remaining energy in its power source may still be sufficient and effectively used for charging a peripheral device, i.e. a target device. In an embodiment, the first power source level is for example a critical power source level, at which the charging device is automatically shut down. "Shutting down" means that the charging device automatically terminates its regular operation behavior. The reason for a typical shutdown is, that a power source is usually not allowed to go totally flat before shutting down the charging device. Thus, there will always be some residual voltage left below the nominal voltage, for example 3.8V. Accessory target devices often have lower voltages, thus with the amount of power left, the accessory target device can still be charged and used for a considerable time. Even residual voltage may be used that is below the typical shutdown voltage (3.4V) of many devices.

In accordance with an embodiment, when charging the target device and the charging device is off either due to powering off by the user or due to running on low power source, charging of the target device may be automatically shared and optimized for both the power source of the charging device and the accessory target device.

Thus, charging can be done even when a device is powered off as long as it has leftover capacity in its power source that its remaining voltage and current is high enough to charge an accessory target device.

It has to be noted here that especially the usage of an NFC-based passive detection of the type of the target device in combination with the charging capability when the power source level is below the first power source level is favorable, since, as described above, NFC-based detection of the type of the target device consumes almost no energy such that even in the off state (shut down) of the charging device the device is still able to reliably detect and charge a target device.

Preferably, in a case of the charging of the target device in case the power source level is below the first power source level, the display is given by an electronic paper display (EPD) or more generally by a bistable display. Bistable table displays are known in the art and have the advantage that with minimized application of energy information can be shown on the EPD. Further, preferably a technology is used here which is able to hold static text and images indefinitely without any electricity. Thus, even though the power source is running extremely low for regular operation of the charging device, the display can still be efficiently used to display the indication of the correct placement of the target device on the display.

Generally speaking, in all described embodiments the described charging device has as its display a bistable (EPD) display on at least one of its outer surfaces and has a wireless charging capability through said EPD display. The charging device may generally have an electric circuitry that may detect an accessory target device placed on top of the display, for example the EPD and initiate the charging function even when the charging device is powered off. In some embodiments this is possible due to different voltage levels between the charging charging device and the charged target device, where the remaining power source capacity of the charging device is adequate to support such lower voltage accessory target devices or other devices charging.

In accordance with an embodiment of the invention, execution of the instructions further causes the charging device to identify the target device and to charge the target device only in case the identified target device is comprised in a list of target devices, for example a list of trusted target devices. For that purpose, the charging device may keep in its memory the list of target devices or may query an external database or service either to get the list of target devices or to obtain information if the target device is comprised in such a list of target devices. This may have the advantage that non-trusted target devices are initially rejected from being charged by the charging device.

The reason for excluding a target device from the list of target devices may be manifold. For example, exclusion may be due to a known incompatibility of the charging device and the target device with respect to wireless charging. Another reason may be to prohibit secret and unwanted charging of target devices in close vicinity to the charging device, especially in case the charging is performed automatically upon detection of the target device. Thus, in accordance with a general embodiment of the invention, generally the charging of the target device can be performed automatically upon detection of the target device by the charging device.

A further example why a target device may not be comprised in a list of target devices may be that charging a specific target device may drain the charging device's power source too much or too fast due to a too high operating voltage of the target device compared to the charging device.

In a further embodiment of the invention, the list of target devices may be dynamic depending on a parameter. The parameter may be a time, spatial location of the charging device (for example GPS or network based location) or the power source level of the charging device. For example, charging may only be allowed during nighttime between 2 and 5 o'clock in the morning. Further, charging may only be allowed in case the charging device is at home rather than at work because at work the power source power of the charging device is mainly used for labor purposes, not for charging purposes.

The reason for selecting as a parameter the power source level is, that for example in case the current power source level is above the first power source level, a certain target device may be charged, whereas it is known that in case the power source level is below the first power source level, the charging device's power source will not have enough power anymore to charge the target device without the risk of damage of the power source.

Thus, the charging device may be capable of providing a wireless charging capability, it may recognize the connected or user acknowledged accessory target device linked to it that is allowed to be charged when placed on top of the display. In case the target device is not permitted, the charging is not being performed and thus the charging circuit is not turned on.

In accordance with a further embodiment of the invention, execution of the instructions further causes the charging device to:
- request and receive a user secret in case the identified target device is not comprised in the list of trusted devices,
- determine if the received user secret matches a predefined user secret,
- charge the target device in case of the matching.

The user secret may be given by anyone of the following: a pin number, pass phrase, fingerprint, encoded NFC tag, a relative movement of the charging device and the target device according to a predefined movement pattern. The NFC tag may be separate from the target device or included in the target device or provided with the target device. Further, for example a sensor or combination of sensors may be used for detecting the relative movement of the charging and target device. Sensors can be on the charging device and on the target device and their relative movement is used as a security pattern.

The user secret may be associated with a certain authorization level. An authorization level may describe the authorization of any one of the following: speed of charging the target device, minimum power source level of the charging device required for charging, first power source level, second power source level, date, time. There may be several passwords given to different people (etc.). In a simplified example password A gives the possibility to charge until 15% remaining on the charger or down to 4,2 volts. Password B makes it possible to charge until 10% or 3,9V.

This may have the advantage that a user is still under control over the charging device to decide on a charging of the target device even though it is not comprised in the list of trusted devices. Thus, the user is able to override the safety mechanism described above. Thus, a protection and overriding capability to charge other devices than user permitted ones may be given by usage of a specific password, user identification or using other known methods and technologies to provide temporary access to enable the charging functionality.

In accordance with an embodiment of the invention, the charging unit comprises a set of different coil structures applicable for charging the target device, wherein execution of the instructions further causes the charging device to determine the type of the target device and depending on the determined type of the target device to select at least one coil structure from the set of different coil structures.

The set of coil structures may be any one of the following: several coils, a coil with at least one switchable coil tap for adjusting a coil length which is effective for the inductive charging.

Thus, the geometrical shape, length, the number of coil windings and even the geometrical coil orientation may be individually selected and adjusted for the purpose of optimizing the coil structure that is active for charging the target device. Using different coil structures it is possible to use different charging voltages and charging currents that may be optimized for each accessory target device to be charged with the device having the wireless charging capability. Such coil structures may be composed of several coils or coils with grounding gates or different grounding points to achieve the same. These gates and points as well as the separate coils are individually switchable and selectable by the charging device and a respective execution of respective instructions.

Using such switchable coil structures it is possible to match the case-optimal coil selection based on the charging chargee device pair. This may even have the advantage that it is possible to achieve the best available charging efficiency and to minimize in device EMI.

For example, the charging device may have more than one coil used for wireless charging, wherein one or more of the coils may be combined with different relevant wireless charging standards, e.g. Qi, PMA, A4WP, wherein at least one wireless charging structure (coil structure) optimized to be used to charge compatible devices or accessories such as Bluetooth headsets, smartwatches and any other kinds of target devices.

Algorithms implemented in software or hardware in the charging device may be used to find the best available charging efficiency between the devices and to minimize in device EMI disturbances and thus optimally select the most appropriate coil structure for the telecommunication-target device pair.

It has to be noted that generally even after final positioning of the target device on the display the selection of the at least one coil structure can be automatically performed by the charging device as a "fine tuning". This would be able to compensate for an imprecise positioning of the device to be charged on the display by a user.

Generally, only a portion of the coil of the charging unit, which is in line with respectively other coils in the target device, can be activated. This may prevent an electromagnetic field being generated by those coil portions which are not in line with respectively the other coil. Different horizontal and vertical distances between the charging unit and the target device may be compensated by switching the coil taps or selecting individual separate coils. In order to be able to return to the ideal voltage level, the number of turns on the side of the coil located in the charging unit can be adjusted with respect to the effective coil length.

Generally, a coil may be implemented in a co-centric pattern with switches (coil taps) at specified intervals to enable the coil to act in different physical lengths and/or forms. Generally, the switch positions may be connected based on the device it is used to achieve the enhanced charging efficiency by matching charging and receiving (target) coil properties. For example, the coil structure may be changed based on physical connectors by grounding, i.e. the coil length is changed based on physical connectors by grounding.

As mentioned above, the display may be a bistable display. Thus, embodiments may be specifically advantageous for charging device which have two displays, one being the bistable display and one being a conventional for example LED display. The front side may have the LED display and the backside may have the bistable display.

In accordance with an embodiment, the display is a bistable display, the execution of the instructions further causes the charging device to:
- determine that the power source level is below the first power source level and above the second power source level,
- powering off the charging device if it is not already powered off,
- determine that the target level is desired to be changed,
- display the placement indication on the bistable display,
- charging the target device.

As discussed above, this may be advantageous since the combined features permit for a charging of target devices even though a charging device is not regularly operable for its normal purpose of usage anymore. Nevertheless, charging is still possible with the remaining power source level and operation of the bistable display is also possible with the remaining power source power.

In accordance with an embodiment of the invention, the charging device may comprise a sound generator for creating a sound, the sound being adapted for indicating the current spatial position of the target device relative to the intended spatial placement of the target device on the surface of the display for which inductive charging of the target device will be possible with the at least predetermined power transfer efficiency.

For example, the pitch of a tone or the repetition frequency of a tone may be used to indicate the current distance of the target device from the intended spatial placement. Thus, even though the placement indication may be concealed by the target device, a user is still able to correct the current position of the target device on the display to obtain the desired optimal position.

In accordance with an embodiment of the invention, the charging device comprises a separate source of energy for anyone of the following: powering the display, displaying the placement indication, performing the coil selection, determine the type of the target device, executing any of the above described instructions except for providing the energy for charging the target device. For example, the energy source may be a separate power source or a capacitor like a super capacitor.

Also, generally any of the power sources described in this document may be any one of the following: battery, super capacitor, a primary energy source (e.g. wind, water, solar, wood, coal, oil, nuclear), a secondary energy source (gas), biochemical, thermal energy, kinetic energy source.

In accordance with an embodiment of the invention, the charging unit comprises an NFC coil, the execution of the instructions causing the charging device to inductively charge the target device using the NFC coil. In addition to the NFC coil, one or more other coils may be used to perform the inductive charging. This may have the advantage that a conventional electronic charging device like a mobile phone already having NFC capabilities may be used for wireless charging. The NFC antenna may be advantageously used especially in case to charge devices with lower voltage specifications than required for running the charging device itself. Said NFC capabilities may be used for both, target device detection as discussed above, as well as charging the target device.

In accordance with an embodiment of the invention, a "flat" secondary antenna for charging the target device may be placed under the label of the target device, which can be pasted on the opposite side of the front of the gadget, i.e. the target device.

In accordance with an embodiment of the invention, execution of the instructions further causes the charging device to detect the presence of the target device at the charging device and upon the detection of the presence displaying the placement indication on the display. Detection of the presence could be for example via a visual detection or a detection by means of the establishment of a communication link between the target device and the charging device. For example, the presence is given in case evaluation detection data proofs a distance of the target device from the charging device below a predefined threshold.

Generally, according to embodiments in case charging is possible or initiated, the displaying of the placement indication on the display may be repeated. For example, the previous placement indication may be deleted, followed by a predefined waiting time, followed by the repeated displaying of the placement indication. Further, the placement indication could be displayed in a blinking manner in case charging is possible or initiated.

In another aspect, the invention relates to a method of operating a charging device comprising a display and a charging unit, the charging unit being adapted for inductively charging a target device, the method comprising:
- display a placement indication on the display, the placement indication indicating a spatial placement of the target device on the surface of the display for which inductive charging of the target device may be possible with at least a predetermined power transfer efficiency,
- charging the target device due to the placement of the target device on the display.

In another aspect, the invention relates to a computer program product comprising machine-executable instructions for performing the above described method.

In another aspect, the invention relates to a charging device comprising a display, a charging unit and a memory storing machine-executable instructions, the charging unit being adapted for inductively charging a target device, the charging device further comprising a processor for controlling the charging device by executing of the instructions, the charging device comprising a power source for charging the target device and operating the charging device, wherein execution of the instructions further causes the charging device to determine if a power source level is below a first power source level on which the charging device is not regularly operable anymore, and in case the power source level is below the first power source level, permitting the inductive charging of the target device with the available power source capacity.

In another aspect, the invention relates to a method of operating a charging device comprising a display, charging unit, the charging unit being adapted for inductively charging a target device, therein the charging device further comprises a power source for charging the target device and operating the charging device, the method comprising determining by the charging device if a power source level is below a first power source level on which the charging device is not regularly operable anymore, and in case the power source level is below the first power source level, permitting the inductive charging of the target device with the available power source capacity.

In another aspect, the invention relates to an apparatus, for example a charging device, as described above, for charging a target device, the apparatus comprising a charging unit adapted for inductively charging the target device and a memory storing machine-executable instructions, the apparatus further comprising a processor for controlling the apparatus by execution of the instructions, the execution of the instructions causing the apparatus to identify the target device and to charge the target device only in case the identified target device is comprised in a list of target devices.

In another aspect, the invention relates to a method being performed by an apparatus for charging a target device, the apparatus comprising a charging unit adapted for inductively charging the target device, the method comprising identifying by the apparatus the target device and charging the target device only in case the identified target device is comprised in a list of target devices.

In another aspect, the invention relates to an apparatus, for example a charging device, for example the charging device described above, for charging a target device, the apparatus comprising a charging unit for inductively charging the target device and the memory storing machine-executable instructions, the apparatus further comprising a processor for controlling the apparatus by execution of the instructions, the charging unit comprising a set of different coil structures applicable for charging the target device, wherein execution of the instructions causes the apparatus:
- to select at least one coil structure from a set of different coil structures, the selection being performed in order to achieve the inductive charging of the target device with at least a predetermined power transfer efficiency,
- to charge the target device using the selected coil structure.

In another aspect, the invention relates to a method being performed by an apparatus for charging a target device, the apparatus comprising a charging unit adapted for inductively charging the target device, the charging unit comprising a set of different coil structures applicable for charging the target device, the method comprising:
- selecting at least one coil structure from the set of different coil structures, the selection being performed in order to achieve the inductive charging of the target device with at least a predetermined power transfer efficiency,
- charging the target device using the selected coil structure.

It is understood that one or more of the aforementioned embodiments of the invention may be combined as long as the combined embodiments are not mutually exclusive.

This especially relates to the usage of the bistable display in any of the above described charging devices and apparatuses, the determination of the type of the target device in any of the above described charging devices, embodiments and apparatuses, the charging of the target device in case the power source level of the charging device is below the first power source level in any of the above described charging devices and apparatuses, irrespective if the apparatus is a charging device or not. This further holds with respect to the identification of the target device and the charging of the target device only in case the identified target device is comprised in a list of target devices, which is applicable to all of the above described charging devices and apparatuses. This further holds with respect to the feature according to which it is determined that the received user secret matches the predefined user secret and to charge a target device only in case of the matching. Further, this holds with respect to the feature of the charging unit comprising the set of different coil structures which are selectable depending on the determined type of the target device - this is applicable for all the above described charging devices and apparatuses.

Further, this holds with respect to the feature of the charging unit comprising the NFC coil.

In accordance with aspects of the invention, a computer program product comprising machine-executable instructions is further disclosed for performing any of the above described methods.

In accordance with an embodiment of the invention, the above mentioned charging device as well as the above mentioned apparatuses may be adapted to be wirelessly charged in an inductive manner by a further additional charging device or apparatus, preferably of the same type, while charging the target device. Here, the target device and the charging device may be of the same type or are even identical.

In other words, this embodiment describes a stacking of various (at least three) devices on top of each other, the first one being the charging device, the second one being located on the charging device being the target device "one" and the third one being located on the target device being another target device "two". Target device "one" passes part of its received charging energy towards target device "two".

Embodiments further describe an electronic device with at least one display, preferably a bistable display and having a charging capability of another device via the device directly placed on top of it. Thus, the order is given by said electronic device, a target device placed on top of the electronic device and a further target device placed on said target device which itself is placed on the electronic device. Preferably, only the electronic (e.g. telecommunication) device on the bottom is connected to mains and the charging energy may be passed through and distributed on any target device of a set or a multitude of target devices which are stacked on top of each other. In the present example charging may either be done by a galvanic connection between all the devices, the galvanic connection being formed into the devices' shapes as male and female connectors. Alternatively, inductive charging may be used, as described above. Charging may be done wirelessly by connecting the devices together by placing them on top of each other and passing part of the charging capacity to the remaining devices remaining on top of the device below.

Instructions may be implemented as a software or hardware that may control the amount of used energy to charge a device within said stack of devices and the amount of energy to be passed onwards to the remaining devices to be charged within the stack. Each individual target device may determine by itself the amount of energy that is used for its own charging purposes and which part of it is passed to the next target device in the stack. Further, an algorithm may be used that may optimize the charging current with the number of devices and desired charging time, when all devices are stacked on top of each other and in case all of these devices wish to be charged. The algorithm may optimize charging and take into account information from for example in device or cloud-based calendars automatically define the time and duration with respect to which the devices which are stacked on top of each other should be charged.

For example, the optimization is determined based on the charging strategy. It can be dynamic or it may be a fixed set of instructions. E.g. it could be possible to first charge the main power source quickly to for example 50% and only then start charging the accessory device. Algorithms for such decision may be based on several different and even contradicting strategies.

For example, at least one of the devices is capable of being connected to mains and passing the charging current to all other devices placed on top of it. Any other device placed on top of the mother device, which is connected to the mains, is not being capable of being connected to the mains and the only possibility of charging these devices (target devices) is by wireless charging capabilities.

The stacking of the target devices on top of each other may even be used to pass information wirelessly towards the mother computer. For example, such information may be school tests or homework which can be automatically graded within the device on the bottom, i.e. the mother device that initially provides the charging energy. The results may then be turned back to the corresponding devices being on top of it. Further, generally the function of the target devices may be configured via a set of software instructions or mechanical switches that pair the devices with respect their role, like for example teacher and pupil versions, the teacher version being adapted for automatically grading tests and pupil versions only being adapted for providing school tests and homework and receiving the grades.

This may be practically implemented in tablet PCs to be used in schools. They may be charged by putting them on top of each other where the lowest one may be a charging dock or a teacher's tablet PC. Charging may be passed through the devices so all are charged overnight. The same structure makes it possible to grade tests, which grades can also be passed between the devices.

Generally, for all embodiments the device (both charger and target device) can be a phone, mobile phone, smartphone, tablet PC, PC, server, laptop, netbook, media player, modem, router, power bank, car and other types of vehicles.

In accordance with an embodiment, the charging unit is spatially located below an interior trim component of a vehicle. For example, charging of the target device will be done through the trim panel. For example, when a person uses an electric car, everything inside this car can serve as a wireless charger - for example the front panel. The user may just place his mobile phone as target device on the trim panel or even keep it inside his pocket, and the apparatus will detect the device and will handle and charge it according to the above described embodiments.

In accordance with an embodiment, the charging unit is spatially located below the surface of a display comprised in a piece of furniture. A piece of furniture may comprise a table, a bar counter, a desk. For example a bar desk/table may be used with its surface comprising a display. The furniture can act as the charging device an detect the target device. Then the desk (i.e. the display) shows and marks a spot on it where that particular device can be a) charged and/or b) charged with the best possible efficiency.

It has to be noted that throughout the present disclosure, the charging unit or the apparatus may be able to charge one or more target devices at the same time. This may either be performed using the charging unit of the charging device, or by using target devices that themselves are adapted to simultaneously be charged and charge one or more further devices. In case the charging unit is charging multiple devices, this could be done by using different coil structures as described above. For example, one or more first coil structures may be assigned to one or multiple first target devices and one or more second coil structure may be assigned to one or multiple second target devices. The first and second coil structure may be partially identical.

Embodiments of the invention may further independently disclose the following:
1) A phone or a similar device is used to charge another device wirelessly. Their charging coils or supported protocols may not need to match as long as there is a physical possibility for charging to occur. It may comprise:
   a) An electronic device that has a processor, display, memory and some user input capabilities, preferably a mobile phone, that has a bistable (EPD) display on at least one of its outer surfaces.
   b) As defined in a), device must have wireless charging capability through an EPD display. On said EPD display outlines of peripheral devices, accessories or other devices are shown that are capable of being wirelessly charged when placed on top of said such EPD display.
   c) As defined in b), such outlines are shown in the place where such devices can be charged with high efficiency matched to their physical and electrical properties. Such properties are e.g. wireless charging coil size, placement, type and voltage.
   d) An electronic device as defined in a) capable of providing a wireless charging capability, recognizes the connected or user acknowledged accessories linked to it that are allowed to be charged when placed on top of the EPD. For other than user permitted devices the charging circuitry is not turned on.
   e) The device can show on its display what is the optimal place for the wireless charging efficiency e.g. using wireframe images, x-marks etc. Several devices areas may be indicated simultaneously.
   f) As defined in e), when each of the to be charged devices is recognized using e.g.
   NFC, the optimal position for that one particular device is shown on the EPD.
2) Generally, charging can be done even when a device is powered off as long as it has left-over capacity in its power source that its remaining voltage and current is high enough to charge an accessory device.
   a) Electronic device (1 a) can show the placement of chargeable devices on EPD after main device has been powered off by the user or due to self-shut-down due to low power source.
   b) Electronic device being powered off as defined in 2a), that has been powered off by the user and has at least or near its nominal power source voltage capacity left, shows areas on the EPD where to place accessories for a good wireless charging efficiencey.
   c) Electronic device being powered off as defined in 2a), that has an electric circuitry that can detect an accessory device placed on top of the EPD and initiate charging function to start from the device's internal power source to the wireless charging coil even when the main device is powered off.
   d) In some embodiments this is possible due to different voltage levels between charging and charged devices, where remaining power source capacity is adequate to support such lower voltage accessory or other device charging.
3) Generally and without relationship to the embodiments 1-2, it is possible that only devices that are listed as trusted are allowed to be charged. Several identification methods incl. NFC are available. Overriding with e.g. a PIN-code is possible.
   a) An electronic device as for example defined in 1a) may be capable of providing wireless charging capability, recognizes the connected or user acknowledged accessories linked to it that are allowed to be charged when placed on top of the EPD.
   b) For other than user permitted devices the charging circuitry is not turned on.
   c) As defined in a), a protection and overriding capability to charge other devices than user permitted ones by giving a specific password, user identification or using other known method
   d) As defined in c), a method can use a temporary access to charge phone.
   e) Further, as defined in c), also a device can be charged with a known-device-charger.
   f) Further, an accessory device may detected by the electronic device as defined in a). Based on its ID or device type, its optimal charging location is shown on the screen.
4) Generally, using different coil structures it is possible to use different charging voltages/currents that are optimized for each accessory device to be charged with the device having wireless charging capability. Such coil structures may compose of several separate coils or coils with grounding gates or different grounding points to achieve the same.
   a) Accessory devices may work at lower voltage than the mentioned electronic device e.g. BT headsets, smartwatches etc.
   b) An electronic device, preferably a mobile phone with a bistable display, having a wireless charging capability by using (e.g.) NFC antenna for wireless charging capability.
   c) Generally, an electronic device is disclosed having more than one coil used for wireless charging, where one or more coils can be compliant with relevant wireless charging standards (e.g. Qi, PMA, A4WP) and where at least one wireless charging structure is optimised to be used to charge other type of compatible devices or accessories such as BT headsets, smart watches.
   d) An electronic device as described in 1a) may be used for providing wireless charging capability with lower nominal voltage than used by itself, where e.g. the NFC antenna is used to charge devices with lower-voltage electrical specifications.
5) Further, embodiments may generally use non-perfect coil structures to match the case-optimal coil selection based on charging-charger -device pair. Such information can be shown on the EPD as described earlier. It also makes it possible to achieve best available charging efficiency and to minimize in-device EMI. Thus, embodiments are disclosed with the following:
   a) An electronic device having the capability to charge other electronic devices wirelessly as known previously, having a variable size coil size/structure.
   b) An electronic device with variable coil structures as defined in a) including algorithms implemented in software or in electronic circuitry are used to find the best available charging efficiency between the devices and to minimize in-device EMI disturbance.
   c) Variable coil structure of a) implemented in a co-centric pattern with switches at specified intervals that enable the coil to act in different physical lengths and/or forms.
   d) Variable coil structure of c) where the switch positions are connected based on the device it is used to charge to achieve enhanced charging efficiency by matching charging and receiving coil properties.
   e) Variable coil structure of c) where the coil structure is changed based on physical connectors by grounding.

As will be appreciated by one skilled in the art, aspects of the present invention may be embodied as a apparatus, method or computer program product. Accordingly, aspects of the present invention may take the form of an entirely hardware embodiment, an entirely software embodiment (including firmware, resident software, micro-code, etc.) or an embodiment combining software and hardware aspects that may all generally be referred to herein as a "circuit," "module" or "system." Furthermore, aspects of the present invention may take the form of a computer program product embodied in one or more computer readable medium(s) having computer executable code embodied thereon.

Any combination of one or more computer readable medium(s) may be utilized. The computer readable medium may be a computer readable signal medium or a computer readable storage medium. A 'computer-readable storage medium' as used herein encompasses any tangible storage medium which may store instructions which are executable by a processor of a computing device. The computer-readable storage medium may be referred to as a computer-readable non-transitory storage medium. The computer-readable storage medium may also be referred to as a tangible computer readable medium. In some embodiments, a computer-readable storage medium may also be able to store data which is able to be accessed by the processor of the computing device. Examples of computer-readable storage media include, but are not limited to: a floppy disk, a magnetic hard disk drive, a solid state hard disk, flash memory, a USB thumb drive, Random Access Memory (RAM), Read Only Memory (ROM), an optical disk, a magneto-optical disk, and the register file of the processor. Examples of optical disks include Compact Disks (CD) and Digital Versatile Disks (DVD), for example CD-ROM, CD-RW, CD-R, DVD-ROM, DVD-RW, or DVD-R disks. The term computer readable-storage medium also refers to various types of recording media capable of being accessed by the computer device via a network or communication link. For example a data may be retrieved over a modem, over the internet, or over a local area network. Computer executable code embodied on a computer readable medium may be transmitted using any appropriate medium, including but not limited to wireless, wireline, optical fiber cable, RF, etc., or any suitable combination of the foregoing. Network protocols that may be used for the transmission include any IP protocols including TCP, UDP, ICMP, HTTP, FTP, POP, SFTP, IMAP, and other protocols like Bluetooth, Fibre Channel, SSH, TLS, PPP, NNTP etc. Transmission can be done using any standards, including wireless standards like Bluetooth, ZigBee, WirelessUSB, WLAN, WIMAX, LTE, GPRS, EDGE etc.

A computer readable signal medium may include a propagated data signal with computer executable code embodied therein, for example, in baseband or as part of a carrier wave. Such a propagated signal may take any of a variety of forms, including, but not limited to, electro-magnetic, optical, or any suitable combination thereof. A computer readable signal medium may be any computer readable medium that is not a computer readable storage medium and that can communicate, propagate, or transport a program for use by or in connection with an instruction execution system, apparatus, or device.

'Computer memory' or 'memory' is an example of a computer-readable storage medium. Computer memory is any memory which is directly accessible to a processor. 'Computer storage' or 'storage' is a further example of a computer-readable storage medium. Computer storage is any non-volatile computer-readable storage medium. In some embodiments computer storage may also be computer memory or vice versa.

A 'processor' as used herein encompasses an electronic component which is able to execute a program or machine executable instruction or computer executable code. References to the computing device comprising "a processor" should be interpreted as possibly containing more than one processor or processing core. The processor may for instance be a multi-core processor. A processor may also refer to a collection of processors within a single computer system or distributed amongst multiple computer systems. The term computing device should also be interpreted to possibly refer to a collection or network of computing devices each comprising a processor or processors. The computer executable code may be executed by multiple processors that may be within the same computing device or which may even be distributed across multiple computing devices.

Computer executable code may comprise machine executable instructions or a program which causes a processor to perform an aspect of the present invention. Computer executable code for carrying out operations for aspects of the present invention may be written in any combination of one or more programming languages, including an object oriented programming language such as , Java, Smalltalk, C++ or the like and conventional procedural programming languages, such as the "C" programming language or similar programming languages and compiled into machine executable instructions. This further includes other well known languages. In some instances the computer executable code may be in the form of a high level language or in a pre-compiled form and be used in conjunction with an interpreter which generates the machine executable instructions on the fly. Java may be used to code on Android.

The computer executable code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

Aspects of the present invention are described with reference to flowchart illustrations and/or block diagrams of methods, apparatus (systems) and computer program products according to embodiments of the invention. It will be understood that each block or a portion of the blocks of the flowchart, illustrations, and/or block diagrams, can be implemented by computer program instructions in form of computer executable code when applicable. It is further understood that, when not mutually exclusive, combinations of blocks in different flowcharts, illustrations, and/or block diagrams may be combined. These computer program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks.

These computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks.

The computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified in the flowchart and/or block diagram block or blocks.

In the following, preferred embodiments of the invention are described in greater detail in which:
- Fig. 1: is a schematic of a cross-section through a charging device and a target device,
- Figs. 2a-c: each show a display with different placement indications,
- Fig. 3: is a loop coil.
- Fig. 4: is a further loop coil,
- Fig. 5: is a flowchart describing an exemplary method of charging a target device.

In the following, similar elements are designated by the same reference numerals.

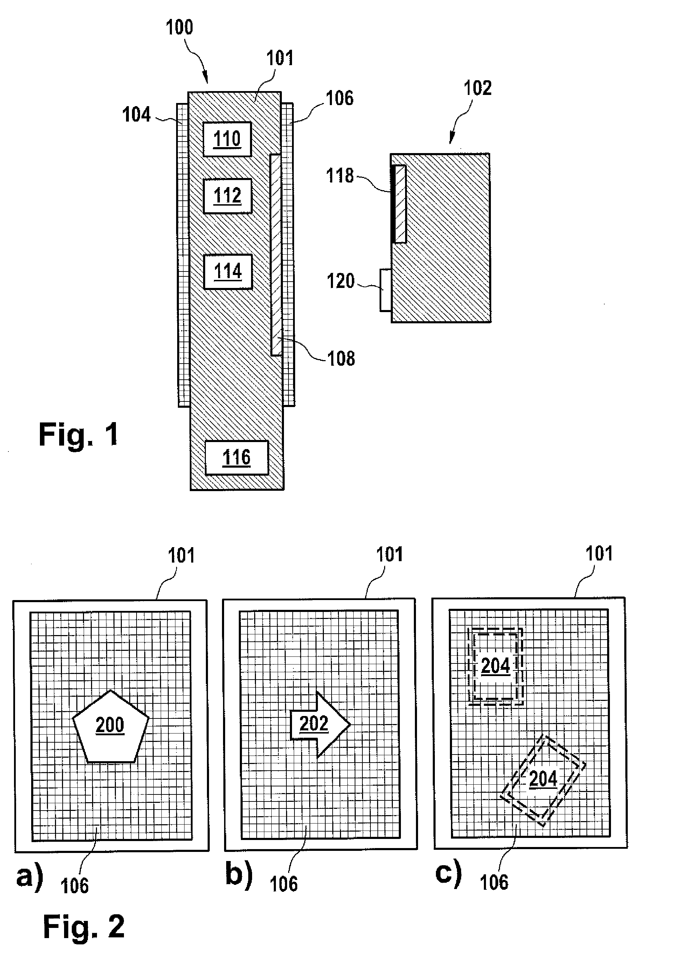

Fig. 1 is a schematic of a cross-section through a charging device 100 and a target device 102. The charging device may be without restriction to generality a mobile phone having two displays, namely an LCD display 104 on the front side of the casing 101 and a bistable EPD display 106 on the backside of the casing 101. Spatially below (viewed perpendicular to) the EPD display 106 a charging unit 108 is spatially located which is adapted for inductively charging the target device 102. For that purpose, the target device 102 has a respective secondary coil 118 which in the example of Fig. 1 is much smaller than the charging unit of the charging device 100.

The charging device 100 further comprises a memory 110 comprising machine-executable instructions and a processor 112. The processor can execute these instructions stored in memory 110 to control the charging device 100. The charging device and all of its electrical components are powered by a power source 114, for example a battery 114.

Further, the casing of the charging device 100 comprises an NFC communication module 116 which is able to detect the NFC tag 120 attached to the target device 102.

The EPD display 106 is able to display a placement indication, as it is shown in the examples of Figs. 2a-2c. More specifically, in Figs. 2a, b and c the casing 101 of the charging device 100 is shown together with a top view onto the EPD display 106. In the example of Fig. 2a, the EPD display uses a polygon 200, which resembles a contour line of the target device when being placed on the display, i.e. when it is in contact with the display 106. In contrast thereto, in Fig. 2b the placement indication is given by an arrow pointing to a certain spatial position on the surface of the EPD display 106. In Fig. 2c, a contour line of two different target devices is shown as indicated by reference numeral 204, wherein preferably each contour line is further described by a written indication with respect to the type of target device which outlines are depicted there.

The purpose of these placement indications is as follows: in order to provide for an optimized charging of the target device when being placed on the display 106, i.e. when it is in contact with the display 106, the relative position between the coil unit 108 and the secondary coil 118 of the target device must be appropriately selected. Thus, the above described outlines of the peripheral devices or the arrow all describe optimized positions of the target device on the EPD display for being charged with high efficiency matched to the physical and electrical properties of both the charging device 100 and the target device 102. Such properties are for example the wireless charging coil sizes, placement, type and voltage.

In an example, the goal is to charge the target device with a predetermined power transfer efficiency which is 'the maximum achievable power transfer efficiency'. In case the charging unit 108 comprises two different and independent charging coils, these charging coils may be spatially located just below the areas 204, as shown in Fig. 2c. In other words, the top left area 204 has a first charging coil beneath it and the area 204 in the bottom right corner has a second charging coil beneath it. The top charging coil may be optimized for a target device type 1 and the bottom charging coil may be optimized for charging a target device type 2. In the example of Fig. 2c, the user is informed about the spatial locations with the indicators 204 together with an indication which indicates the said type 1 or 2 of the target device. It is thus possible to provide selectively for a given target device the optimized position where favorably the target device can be wirelessly and inductively charged with maximized power transfer efficiency.

As mentioned, the charging unit may comprise either a single coil, or one or more separate coils, even comprising at least one switchable coil tap for adjusting a coil length which is effective for the inductive charging. A combination of the aforementioned possibilities is also possible.

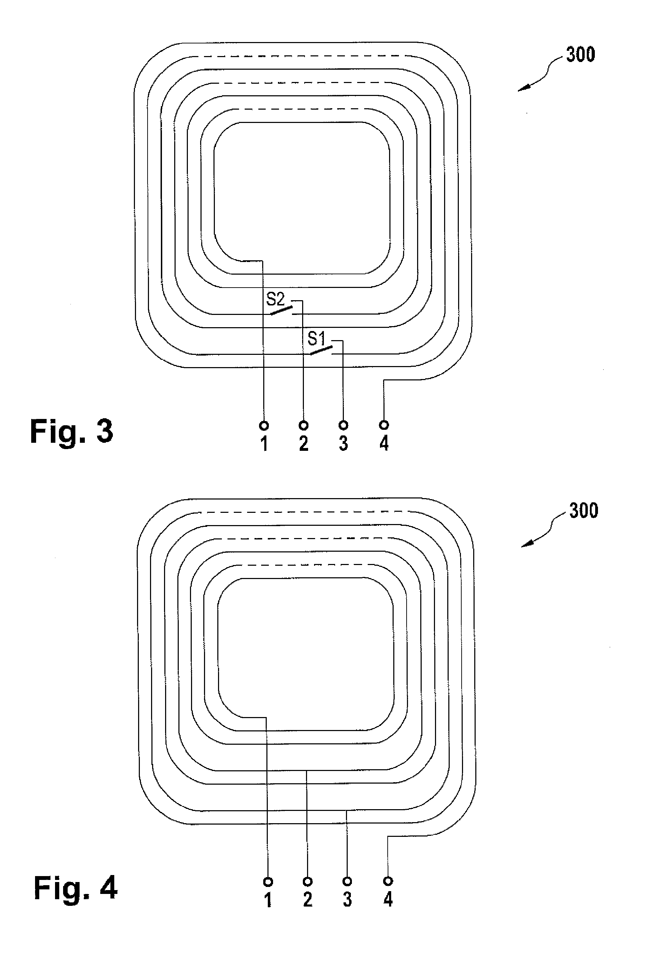

Fig. 3a is an example of a coil with connectors within the coil's structure itself. Two switches are provided in the switch S1 and switch S2. The grounding point 4 may supply the current and depending on opening or closing the switches S1 and S2, any one of the other grounding points 1, 2 or 3 will be active. Thus, the coil 300 depicted in Fig. 3 has three switchable coil taps for adjusting the coil length which is effective for the inductive charging.

In the example of Fig. 4, a coil structure 300 is given with concentric coil loops. Here, coil matching is done by using different grounding points, i.e. coil taps, numbered 1-3, where 4 supplies the current.

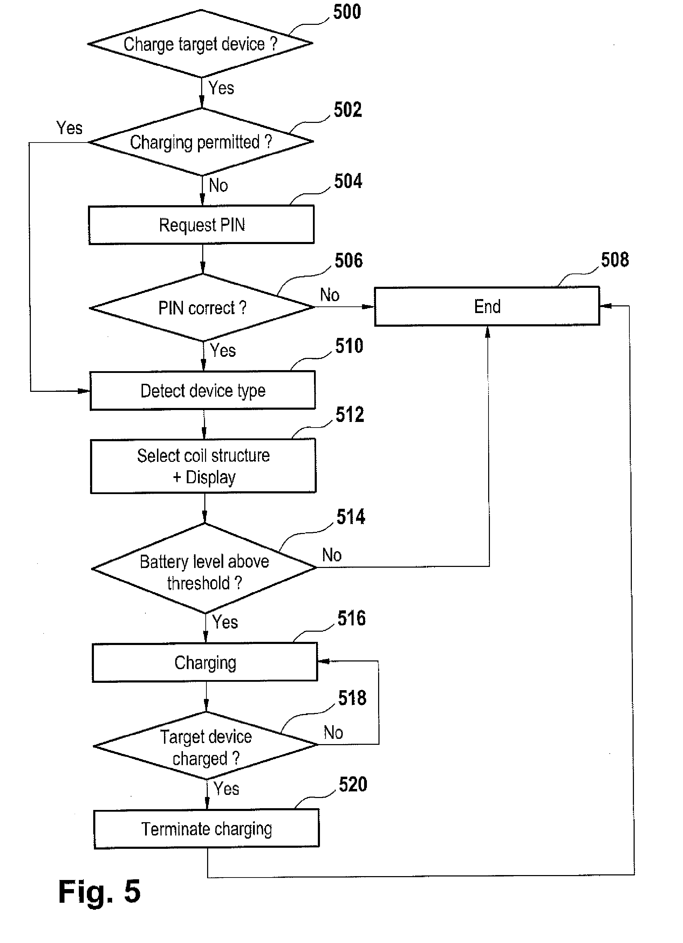

Fig. 5 is a flowchart describing a method of charging a target device wirelessly and inductively by a charging device, for example the mobile phone discussed above in Fig. 1. The method starts in block 500 where initiation of charging of the target device is required. For example, the NFC tag 120 and its approach to the NFC reader 116 may be used as an indication that the target device wants to be charged by the charging device 100. A further possibility would be an explicit command by a user of the charging device 100, for example by pressing a certain button on the display 104 or pressing any other button provided by the charging device 100. A further possibility would be an automated charging initiated by a task process continuously running on the charging device. For example, this task process may automatically start an attempt to charge a target device every day at 6am in the morning for four hours.

In case that block 500 returns that the target device is to be charged, block 502 checks if the target device 500 is permitted to being charged. For example, near field communication using NFC tag 120 and NFC reader 116 may indicate a certain identifier transmitted via the NFC tag 120 to the charging device which is not listed in a list of trusted target devices. The list may be on the charging device or an external list provider. In this case, the charging is not permitted but the charging device may request from the user of the device a PIN code or another secret in block 504. In case the entered user secret or pin is deemed to be correct in block 506, the method continues in block 510 with a specific detection of the type of the target device 102. If in case in block 502 it turns out that the target device is permitted for being charged, then block 510 might directly follow block 502.

Block 510 is optional in that the detection of the device type may already be performed in combination with block 502. For example, the information transmitted by the NFC tag 120 to the charging device may already include the device type such that a separate detection of the device type is not necessary. Further, the decision if the charging is permitted or not may also be solely based on the device type such that an identification as understood as a unique identifier is not necessary here. The device type may generally comprise any of the following of the target device: a manufacturer name, a device ID which itself may include a user designated name and/or a MAC address, any UID, a generic type (e.g. a headset), a model specific name, a type specifying the general purpose of the device (e.g. a scanner used for scanning goods).

In case in block 506 it turns out that the user is not able to enter a correct secret or pin, the method immediately ends in block 508 and no charging is performed.

After block 510 the method continues with block 512, i.e. the selection of an appropriate coil structure for effectively charging the target device, as well as the display of the placement indication on the display. In block 514 the charging device determines if its power source level is above a certain threshold such that it is able to really charge the target device. Block 514 may also be provided at another position in the flowchart, for example immediately after step 500. In case the charging device is unable to charge the target device because of lack of sufficient energy in its power source, the method may end immediately with block 508. Contrary, in case the charging device has sufficient energy for charging the target device, the method may continue with block 516 and charging of the target device. The charging is performed using the selected coil structure in an inductive manner. Blocks 516 and 518 may form a continuous loop which may check in block 518 if the target device is sufficiently charged. However, block 518 can be omitted by setting a predefined time range for which the charging is active.

In step 520 the charging is terminated after in block 518 it has been determined that the target device is fully charged. After block 520, the method ends again in block 508.

In embodiments, the above shown charging device is able to use a wireless charging possibility. The charging device may be a mobile telephone that secondarily works through an EPD display. The efficiency of wireless charging through an EPD display may be much higher than through a normal LED display. Generally, the device 100 may be any bistable EPD type display to enhance wireless charging efficiency, especially when being used in form of a mobile phone as a wireless charger. Such an electronic device may have a processor, display, memory and some user input capabilities, preferably it may be a mobile phone, that is a bistable EPD display on at least one of its outer surfaces that has the wireless charging capability through said EPD display. On the EPD display, outlines of peripheral devices, accessories or other devices may be shown that are capable of being wirelessly charged when placed on top of such an EPD display. Such accessory devices may work at lower voltages than the above mentioned electronic mother device, 100, for example Bluetooth headset and smartwatches etc.

## Claims

1. Device (100) comprising a display, a charging unit (108) and a memory (112) storing machine executable instructions, the charging unit (108) being adapted for inductively charging a target device (102), the charging device (100) further comprising a processor (110) for controlling the charging device (100) by execution of the instructions, the execution of the instructions causing the charging device (100) to display a placement indication (200; 202; 204) on the display, the placement indication (200; 202; 204) indicating a spatial placement of the target device (102) on the surface of the display for which inductive charging of the target device (102) will be possible with at least a predetermined power transfer efficiency.

2. The charging device (100) of claim 1, the placement indication (200; 202; 204) being any one of the following: a part or all of a contour line of the target device (102) when being placed on the display, a part or all of a 3D image of the target device (102) when being placed on the display, a written instruction, a symbol indicating the center position of the area on the display where the inductive charging of the target device (102) will be possible with said at least predetermined power transfer efficiency, a pictorial instruction how to place the target device (102) onto the display, a photograph or image of the target device (102) displaying the visual appearance of the target device (102) when being placed on the display.

3. The charging device (100) of claim 1 or 2, wherein execution of the instructions further causes the telecommunications device to determine the type of the target device (102) and to select the placement indication (200; 202; 204) specifically for the determined type of the target device (102).

4. The charging device (100) of any of the previous claims, the charging device (100) comprising a power source (114) for charging the target device (102) and operating the charging device (100), wherein execution of the instructions further causes the charging device (100) to determine if a power source level is below a first power source level on which the charging device (100) is not regularly operable any more, and in case the power source level is below the first power source level, permitting the inductive charging of the target device (102) with the available power source capacity.

5. The charging device (100) of any of the previous claims, wherein execution of the instructions further causes the charging device (100) to identify the target device (102) and to charge the target device (102) only in case the identified target device (102) is comprised in a list of target devices (102).

6. The charging device (100) of claim 5, wherein execution of the instructions further causes the charging device (100) to
- request and receive a user secret in case the identified target device (102) is not comprised in the list of trusted devices,
- determine if the received user secret matches a predefined user secret,
- charge the target device (102) is case of the matching.

7. The charging device (100) of any of the previous claims, the charging unit (108) comprising a set of different coil structures applicable for charging the target device (102), wherein execution of the instructions further causes the charging device (100) to determine the type of the target device (102) and depending on the determined type of the target device (102) to select at least one coil structure from the set of different coil structures.

8. The charging device (100) of claim 7, the set of coil structures being any one of the following: separate coils, a coil with at least one switchable coil tap for adjusting a coil length which is effective for the inductive charging.

9. The charging device (100) of any of the previous claims, wherein the display is a bistable display, wherein execution of the instructions further causes the charging device (100) to
- determine that the power source level is below the first power source level and above the second power source level,
- powering off the charging device (100) if it is not already powered off,
- determine that the target device (102) is desired to be charged,
- display the placement indication (200; 202; 204) on the bistable display,
- charging the target device (102).

10. The charging device (100) of any of the previous claims, wherein the charging unit (108) comprises an NFC coil, the execution of the instructions causing the charging device (100) to inductively charge the target device (102) using the NFC coil.

11. The device (100) of any of the previous claims, wherein execution of the instructions further causes the charging device (100) to detect the presence of the target device at the charging device (100) and upon the detection of the presence displaying the placement indication (200; 202; 204) on the display.

12. The device (100) of any of the previous claims, wherein the display is an EPD display, the device further comprising a second display (104) on the side of the device opposite to the EPD display.

13. A method of operating a charging device (100) comprising a display and a charging unit (108), the charging unit (108) being adapted for inductively charging a target device (102), the method comprising:
- display a placement indication (200; 202; 204) on the display, the placement indication (200; 202; 204) indicating a spatial placement of the target device (102) on the surface of the display for which inductive charging of the target device (102) will be possible with at least a predetermined power transfer efficiency,
- charging the target device (102) due to the placement of the target device (102) on the display.

14. A computer program product comprising machine executable instructions for performing the method of claim 11.

15. Charging device (100) comprising a display, a charging unit (108) and a memory (112) storing machine executable instructions, the charging unit (108) being adapted for inductively charging a target device (102), the charging device (100) further comprising a processor (110) for controlling the charging device (100) by execution of the instructions, the charging device (100) comprising a power source (114) for charging the target device (102) and operating the charging device (100), wherein execution of the instructions further causes the charging device (100) to determine if a power source level is below a first power source level on which the charging device (100) is not regularly operable any more, and in case the power source level is below the first power source level, permitting the inductive charging of the target device (102) with the available power source capacity.

16. An apparatus for charging a target device (102), the apparatus comprising a charging unit (108) adapted for inductively charging the target device (102) and a memory (112) storing machine executable instructions, the apparatus further comprising a processor (110) for controlling the apparatus by execution of the instructions, the execution of the instructions causing the apparatus to identify the target device (102) and to charge the target device (102) only in case the identified target device (102) is comprised in a list of target devices (102).

17. The apparatus of claim 14, the charging unit being spatially located below an interior trim component of a vehicle.

18. An apparatus for charging a target device (102), the apparatus comprising a charging unit (108) adapted for inductively charging the target device (102) and a memory (112) storing machine executable instructions, the apparatus further comprising a processor (110) for controlling the apparatus by execution of the instructions, the charging unit (108) comprising a set of different coil structures applicable for charging the target device (102), wherein execution of the instructions causes the apparatus
- to select at least one coil structure from the set of different coil structures, the selection being performed in order to achieve the inductive charging of the target device (102) with at least a predetermined power transfer efficiency,
- to charge the target device (102) using the selected coil structure.
